# EUROPEAN PATENT APPLICATION

(11) **EP 3 709 728 A1**
(43) Date of publication of application: **16.09.2020**
(21) Application number: 18875361.0
(22) Date of filing: 07.11.2018
(51) Int. Cl.: H04W 72/00

(54) **DATA PACKET REPAIR METHOD, BASE STATION, TERMINAL AND COMPUTER READABLE STORAGE MEDIUM**

(30) Priority: 07.11.2017 CN 201711087286
(71) Applicant: ZTE Corporation, Shenzhen, Guangdong 518057 (CN)
(72) Inventor: ZENG, Zhaohua, Shenzhen Guangdong 518057 (CN); WANG, Lei, Shenzhen Guangdong 518057 (CN)
(74) Representative: Ipsilon
(86) International application number: PCT/CN2018/114349
(87) International publication number: WO 2019/091399

(57) **Abstract**

Provided is a data packet repair method, including: in response to that a data packet fails to pass a verification at a first protocol layer of a communication protocol stack, delivering the data packet to a second protocol layer of the communication protocol stack; performing a verification on an identification bit of the data packet for the second protocol layer at the second protocol layer of the communication protocol stack; and in response to that the identification bit of the data packet for the second protocol layer fails to pass the verification, discarding the data packet. Further provided are a base station, a terminal and a computer-readable storage medium.

## Description

### CROSS-REFERENCE TO RELATED APPLICATIONS

The present application claims the priority of Chinese Patent Application No.201711087286.1, entitled "data packet repair method, base station, and computer-readable storage medium" filed on November 7, 2017, the contents of which are incorporated herein in their entirety by reference.

### TECHNICAL FIELD

The present disclosure relates to, but is not limited to, the field of wireless communication technology.

### BACKGROUND

In a long term evolution (LTE) network, a hybrid automatic repeat request (HARQ) mechanism is used in a physical layer, however, the HARQ mechanism may require a large number of retransmissions.

In addition, in a VoLTE (voice over LTE) service, a voice quality is affected by factors such as delay, jitter, and packet loss rate. The packet loss rate has a large influence on user's experiences, and a high packet loss rate may cause problems of voice distortion, word swallowing, intermittence, unclear and the like. Meanwhile, the VoLTE service has a high requirement on the delay, and if the delay is too large, problems such as latency and echo that affect the user's experiences may occur. In 3GPP (3rd Generation Partnership Project) protocol, requirements for voice services include that an end-to-end delay is lower than 200ms and the packet loss rate is lower than 1%, so that a good voice service can be provided. A radio link control (RLC) layer may configure an unacknowledged mode (UM) for the VoLTE service, which may cause a voice data packet to be directly discarded after a demodulation failure at the physical layer, thereby affecting the user's experiences.

### SUMMARY

An embodiment of the present disclosure provides a data packet repair method, including: delivering a data packet to a second protocol layer of a communication protocol stack in response to that the data packet fails to pass a verification at a first protocol layer of the communication protocol stack; performing a verification on an identification bit of the data packet for the second protocol layer at the second protocol layer of the communication protocol stack; and discarding the data packet in response to that the identification bit of the data packet for the second protocol layer fails to pass the verification.

An embodiment of the present disclosure further provides a base station, including: a delivery module configured to deliver a data packet to a second protocol layer of a communication protocol stack in response to that the data packet fails to pass a verification at a first protocol layer of the communication protocol stack; and a verification module configured to verify an identification bit of the data packet for the second protocol layer at the second protocol layer of the communication protocol stack, and discard the data packet in response to that the identification bit of the data packet for the second protocol layer fails to pass the verification.

An embodiment of the present disclosure further provides a terminal including a processor and a memory, where the memory stores a program including executable instructions, and the processor executes the program to implement the data packet repair method according to the embodiment of the present disclosure.

An embodiment of the present disclosure further provides a computer-readable storage medium storing a computer program thereon, where the computer program, when executed, implements the data packet repair method of the embodiment of the present disclosure.

### DESCRIPTION OF DRAWINGS

Fig. 1 shows a schematic flow chart diagram illustrating a data packet repair method according to an embodiment of the present disclosure;
FIG. 2 shows a schematic flow chart diagram illustrating a data packet repair method according to an embodiment of the present disclosure;
Fig. 3 shows a schematic structural diagram of a base station according to an embodiment of the present disclosure;
Figs. 4a, 4b, 4c and 4d show schematic structural diagrams of a MAC sublayer header of a data packet according to an embodiment of the present disclosure and a schematic flow chart diagram illustrating a MAC sublayer verification on a data packet according to an embodiment of the present disclosure; and
Fig. 5 shows a schematic structural diagram of an RLC sublayer header of a data packet according to an embodiment of the present disclosure.

### DESCRIPTION OF EMBODIMENTS

Technical solution of the present disclosure will be described in detail below with reference to accompanying drawings and specific embodiments.

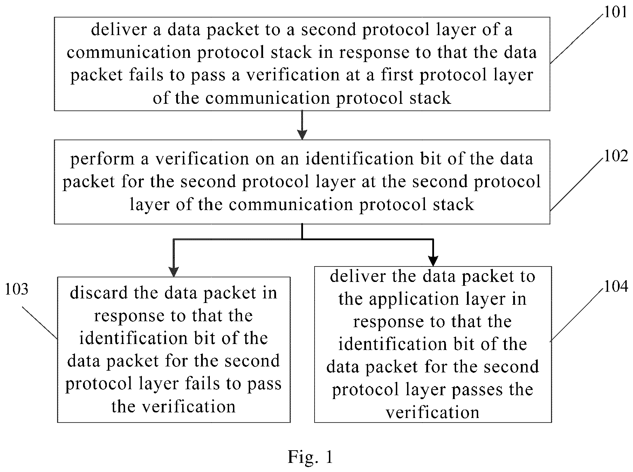

Fig. 1 shows a schematic flow chart diagram of a data packet repair method according to an embodiment of the present disclosure. As shown in Fig. 1, the data packet repair method of the embodiment of the present disclosure includes following steps 101 to 104.

At step 101, a data packet is delivered to a second protocol layer of a communication protocol stack in response to that the data packet fails to pass a verification at a first protocol layer of the communication protocol stack.

In the embodiment, the first protocol layer may be a physical layer.

In practical applications, when hybrid automatic repeat request (HARQ) merging is performed at the physical layer of a base station in an LTE network, a cyclic redundancy check (CRC) needs to be performed, and when the CRC fails, it is considered that a HARQ for a corresponding data packet fails, the data packet will not be delivered to a next protocol layer, and the data packet that passes the CRC is delivered to the next protocol layer. However, as shown in following table 1, it can be found, by performing simulation on a bit error rate of data packet at the physical layer of the LTE network, that the bit error rate of data packet (horizontal BER in the table 1) does not exceed 50% at the physical layer, that is, the bit error rate of data packet at the physical layer of the LTE network is always below 50%, even if a cumulative distribution function (CDF) (i.e., vertical CDF in the table 1) is at 78%, the bit error rate of data packet is still below 30%, and thus the data packet that fails to pass the CRC at the physical layer have a high probability of being correctly parsed at an application layer.

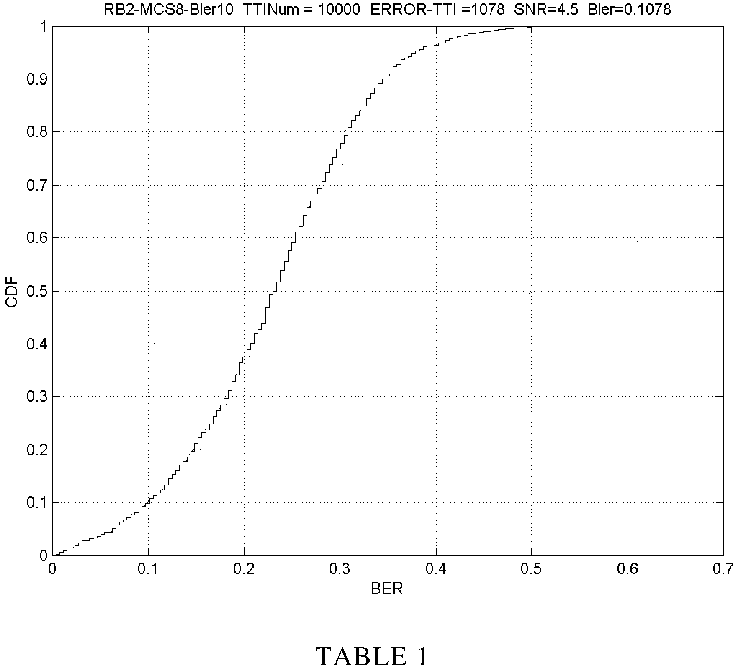

Moreover, in the LTE network, data is transferred by a transparent transfer method, and generally, when the data packet is parsed, header messages corresponding to respective protocol layers are parsed, and even if the data packet does not pass the CRC at the physical layer, as long as no bit of a header of the data packet is error, the data packet can be continuously delivered to the next protocol layer until the data packet is delivered to the application layer, and a content of the data packet is parsed by an application layer related protocol or application.

Therefore, in the embodiment, even in a case where the data packet fails to pass the CRC at the physical layer, the data packet is delivered to the next protocol layer.

At step 102, a verification is performed on an identification bit of the data packet for the second protocol layer at the second protocol layer of the communication protocol stack.

At step 103, the data packet is discarded in response to that the identification bit of the data packet for the second protocol layer fails to pass the verification.

At step 104, the data packet is delivered to the application layer in response to that the identification bit of the data packet for the second protocol layer passes the verification.

In the embodiment, the second protocol layer may include a media access control (MAC) sublayer, a radio link control (RLC) sublayer, and a packet data convergence protocol (PDCP) sublayer.

The verification performed on the identification bit of the data packet for the second protocol layer at the second protocol layer of the communication protocol stack may include: performing a bit-by-bit verification on header data of the data packet according to a data packet header format preset at the medium access control sublayer, in response to that all bits in the header data of the data packet conforms to the data packet header format preset at the medium access control sublayer, determining that the data packet passes the verification and delivering the data packet to the radio link control sublayer, and in response to that there is a bit, in the header data of the data packet, not conforming to the data packet header format preset at the medium access control sublayer, discarding the data packet; matching, at the radio link control sublayer, a radio link control sequence number value of the data packet with a window range value preset by the radio link control sublayer, in response to that the radio link control sequence number value of the data packet is within the window range value preset by the radio link control sublayer, determining that the data packet passes the verification and delivering the data packet to the packet data convergence protocol sublayer, and in response to that the radio link control sequence number value of the data packet exceeds the window range value preset by the radio link control sublayer, discarding the data packet; and comparing, at the packet data convergence protocol sublayer, a packet data convergence protocol sequence number value of the data packet with a sequence number value preset by the packet data convergence protocol sublayer to generate a comparison result, in response to that the comparison result is less than or equal to a preset threshold value, delivering the data packet to the application layer, and in response to that the comparison result is greater than the preset threshold value, discarding the data packet.

In the embodiment, the radio link control (RLC) sequence number value may be an unacknowledged mode (UM) radio link control sequence number (SN) value.

In the embodiment, when the data packet is decoded at the application layer, the application layer has a certain fault-tolerant mechanism, and in response to that the bit error rate is low, a probability that the data packet may be recovered correctly is very high, especially for the VoLTE service. In response to that the RLC sublayer is in the UM mode, if the data packet with an error content and no error header is forcibly delivered to the application layer for decoding, the application layer has a certain probability to parse the data packet, and a relevant decoder of the application layer may recover a phase and an amplitude of the data packet through remaining valid bits of the data packet and relevant information of previous and subsequent voice messages, and may maximally recover an original voice waveform carried by the data packet, thereby minimizing a loss of voice. Therefore, the data packet repair method of the embodiment of the present disclosure can effectively reduce the packet loss rate. In addition, even using a retransmission mechanism, the number of retransmissions can be effectively reduced by using the data packet repair method according to the embodiment of the present disclosure. In view of this, the data packet repair method according to the embodiment of the present disclosure can improve the delay, and is beneficial to real-time communication.

In practical applications, the data packet repair method provided in the embodiment of the present disclosure may further include performing layer-by-layer marking on the data packet, which fails to pass the CRC at the physical layer, in an uplink system of the base station; setting a threshold that should be matched with a header content of the data packet in each protocol layer where the data packet is delivered in sequence; delivering only the data packet that meets all thresholds of protocol layers to the application layer finally; and discarding the data packet that does not meet any threshold of the protocol layer. For example, the method may be implemented through following steps (1) to (3).

At step (1), after the physical layer is subjected to the HARQ, the data packet that fails to pass the CRC is determined as a target data packet needing to be marked, and the data packet that passes the CRC is delivered directly to a next protocol layer.

At step (2), the marked data packet is delivered continuously to the next protocol layer, and header matching is performed, for example, MAC sublayer header matching is performed firstly; in response to that MAC sublayer header data is correct, the marked data packet is delivered continuously to the RLC sublayer, and RLC sublayer header matching is performed; in response to that RLC sublayer header data is correct, the marked data packet is delivered continuously to the PDCP sublayer, and PDCP sublayer header matching is performed; and in response to that PDCP sublayer header data is correct, the marked data packet is transmitted through an S1 interface.

At step (3), discarding operation processing is directly performed on the data packet with unmatched header at any protocol layer, namely it is processed according to packet loss.

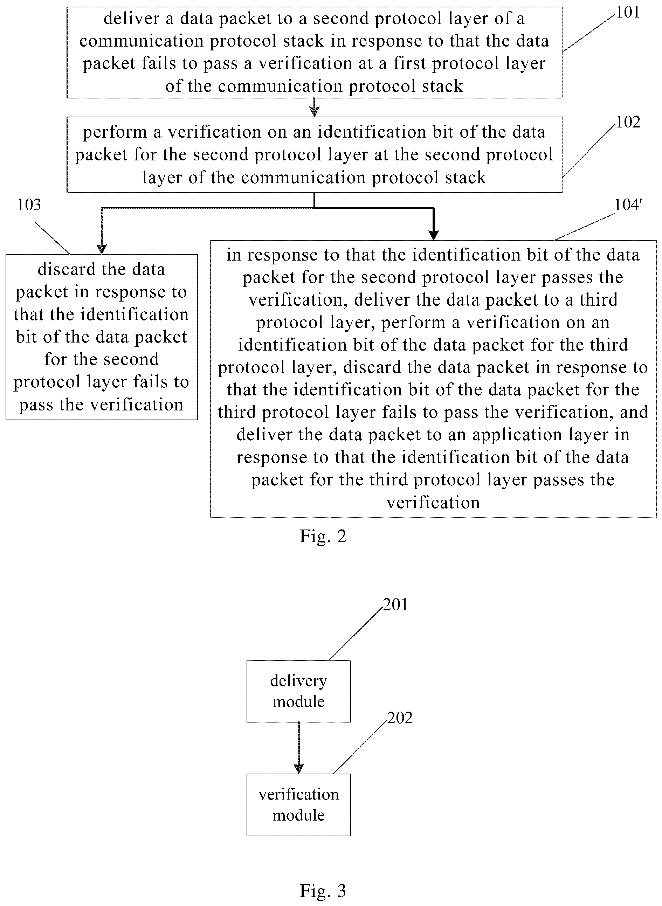

In some implementations, as shown in Fig. 2, step 104 in the data packet repair method according to the embodiment of the present disclosure is replaced by step 104', that is, in response to that the identification bit of the data packet for the second protocol layer passes the verification, the data packet is delivered to a third protocol layer of the communication protocol stack, a verification is performed on an identification bit of the data packet for the third protocol layer by the third protocol layer of the communication protocol stack, the data packet is discarded in response to that the identification bit of the data packet for the third protocol layer fails to pass the verification, and the data packet is delivered to the application layer in response to that the identification bit of the data packet for the third protocol layer passes the verification.

The third protocol layer of the communication protocol stack may include an internet protocol (IP) sublayer, a transmission control protocol (TCP) sublayer or a user data protocol (UDP) sublayer, and a real-time transport protocol (RTP) sublayer.

For example, in the step (2) described above, in response to that the PDCP sublayer header data is correct, IP sublayer header matching, TCP sublayer header matching or UDP sublayer header matching, and RTP sublayer header matching may be performed continuously, and in response to that each sublayer header data is correctly matched, the data packet can be transmitted through the S1 interface.

In practical applications, since the RTP sublayer is specific to the VoLTE service, the RTP sublayer header matching is optional.

In summary, with the data packet repair method provided by the embodiment of the present disclosure, the data packet that fails to pass the CRC at the physical layer is further verified, that is, the data packet is verified layer-by-layer in a LTE protocol stack, especially for the data packet of the VoLTE service. The data packet whose header data for each protocol layer can be correctly parsed is forcibly delivered to the application layer for recovery processing, and the application layer has a certain probability of correctly parsing the content of the data packet. Therefore, compared with a strategy of directly discarding the data packet that fails to pass the CRC at the physical layer, the data packet repair method provided by the embodiment of the present disclosure can effectively reduce the packet loss rate and improve the user's experiences. In addition, even in a case of using the retransmission mechanism, the number of retransmissions can be effectively reduced by using the data packet repair method according to the embodiment of the present disclosure.

Fig. 3 shows a schematic structural diagram of a base station according to an embodiment of the present disclosure. As shown in Fig. 3, the base station of the embodiment of the present disclosure includes a delivery module 201 and a verification module 202.

The delivery module 201 is configured to deliver a data packet to a second protocol layer of a communication protocol stack in response to that the data packet fails to pass a verification at a first protocol layer of the communication protocol stack.

The verification module 202 is configured to verify an identification bit of the data packet for the second protocol layer at the second protocol layer of the communication protocol stack, and discard the data packet in response to that the identification bit of the data packet for the second protocol layer fails to pass the verification.

In some implementations, the delivery module 201 is further configured to: deliver the data packet to an application layer in response to that the identification bit of the data packet for the second protocol layer passes the verification.

The first protocol layer of the communication protocol stack is a physical layer, and the second protocol layer of the communication protocol stack includes a medium access control sublayer, a radio link control sublayer and a packet data convergence protocol sublayer.

In some implementations, the verification module 202 is configured to perform a bit-by-bit verification on header data of the data packet according to a data packet header format preset at a medium access control sublayer, determine that the data packet passes the verification at the medium access control sublayer in response to that all bits in the header data of the data packet conforms to the data packet header format preset at the medium access control sublayer, and discard the data packet in response to that there is a bit, in the header data of the data packet, not conforming to the data packet header format preset at the medium access control sublayer; and the delivery module 201 is configured to deliver the data packet to the radio link control sublayer in response to that the data packet passes the verification at the medium access control sublayer.

In some implementations, the verification module 202 is further configured to match, at the radio link control sublayer, a radio link control sequence number value of the data packet with a window range value preset by the radio link control sublayer, determine that the data packet passes the verification in response to that the radio link control sequence number value of the data packet is within the window range value preset by the radio link control sublayer, and discard the data packet in response to that the radio link control sequence number value of the data packet exceeds the window range value preset by the radio link control sublayer; and the delivery module 201 is further configured to deliver the data packet to the packet data convergence protocol sublayer in response to that the data packet passes the verification at the radio link control sublayer.

In some implementations, the verification module 202 is further configured to compare, at the packet data convergence protocol sublayer, a packet data convergence protocol sequence number value of the data packet with a sequence number value preset by the packet data convergence protocol sublayer to generate a comparison result, and discard the data packet in response to that the comparison result is greater than a preset threshold; and the delivery module 201 is configured to deliver the data packet to the application layer in response to that the comparison result is less than or equal to the preset threshold value.

In some implementations, the delivery module 201 is further configured to deliver the data packet to a third protocol layer of the communication protocol stack in response to that the identification bit of the data packet for the second protocol layer passes the verification; the verification module 202 is further configured to verify an identification bit of the data packet for the third protocol layer at the third protocol layer of the communication protocol stack, and discard the data packet in response to that the identification bit of the data packet for the third protocol layer fails to pass the verification; and the delivery module 201 is further configured to deliver the data packet to the application layer in response to that the identification bit of the data packet for the third protocol layer passes the verification.

The third protocol layer of the communication protocol stack may include an internet protocol sublayer, a transmission control protocol sublayer or a user data protocol sublayer, and a real-time transport protocol sublayer.

In practical applications, the real-time transport protocol sublayer is optional.

The delivery module 201 and the verification module 202 according to the embodiment of the present disclosure may be implemented by software, hardware or a combination thereof, and the hardware may include, for example, a central processing unit (CPU), a microprocessor unit (MPU), a digital signal processor (DSP), a field programmable gate array (FPGA), a computer, an integrated circuit, or the like, and may further include a memory.

The memory may be any type of volatile or non-volatile memory, or a combination thereof. The nonvolatile memory may be a read only memory (ROM), a programmable read only memory (PROM), an erasable programmable read-only memory (EPROM), an electrically erasable programmable read-only memory (EEPROM), a magnetic random access memory (FRAM), a flash memory, a magnetic surface memory, an optical disc, or a compact disc read-only memory (CD-ROM). The magnetic surface storage may be a disk storage or a tape storage. The volatile memory may be a random access memory (RAM), which acts as an external cache memory. By way of illustration and not limitation, many forms of RAM may also be used in the implementation of the embodiment of the present disclosure, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous link Dynamic Random access memory (SLDRAM), direct ram-bus random access memory (DRRAM), or the like. The memory described in the embodiment of the present disclosure is intended to include, without being limited to, any suitable type of memory.

The verification on the header of the data packet for each protocol layer in embodiments of the present disclosure will be explained in detail by way of examples below.

For example, in the LTE network, a verification processing is performed on the MAC sublayer header of the data packet that fails to pass the cyclic redundancy check (CRC) in a QCI (QOS Class Identifier) 1 service of the physical layer. A local ID (LCID) corresponding to the QCI1 service may be configured to be 5, and it can be determined through following tables 2 and 3 that a corresponding channel is a logical channel when the LCID is 5, that is, control plane information and encoded and encrypted voice or data are transmitted on the logical channel.

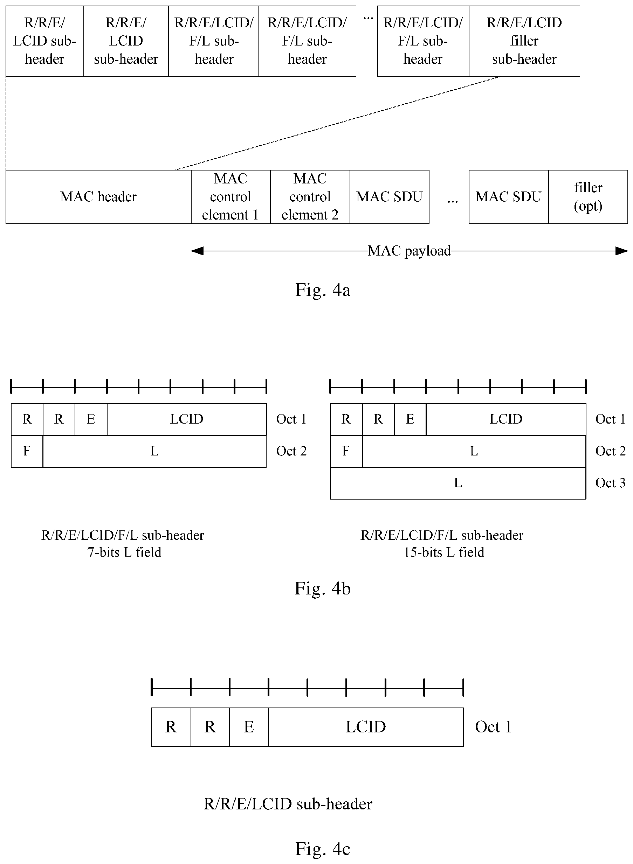

The MAC sublayer header data may be composed of multiple sub-headers, Fig. 4a shows a composition of MAC sublayer header data of a protocol data unit (PDU), Fig. 4b and Fig. 4c show a content and a meaning of the MAC sublayer header, and a specific content may refer to a detailed description of MAC sublayer header format in 3GPP 36.321 protocol, and is not described herein again.

**TABLE 2**

| Value range | LCID value |
|---|---|
| 00000 | CCCH (common control channel) |
| 00001-01010 | logical channel ID |
| 01011-11000 | reserved |
| 11001 | extended power headroom report |
| 11010 | power headroom report |
| 11011 | C-RNTI |
| 11100 | truncated BSR |
| 11101 | short BSR |
| 11110 | long BSR |
| 11111 | filler |

**TABLE 3**

| value range | header length (bits) |
|---|---|
| 0 | 7 |
| 1 | 15 |

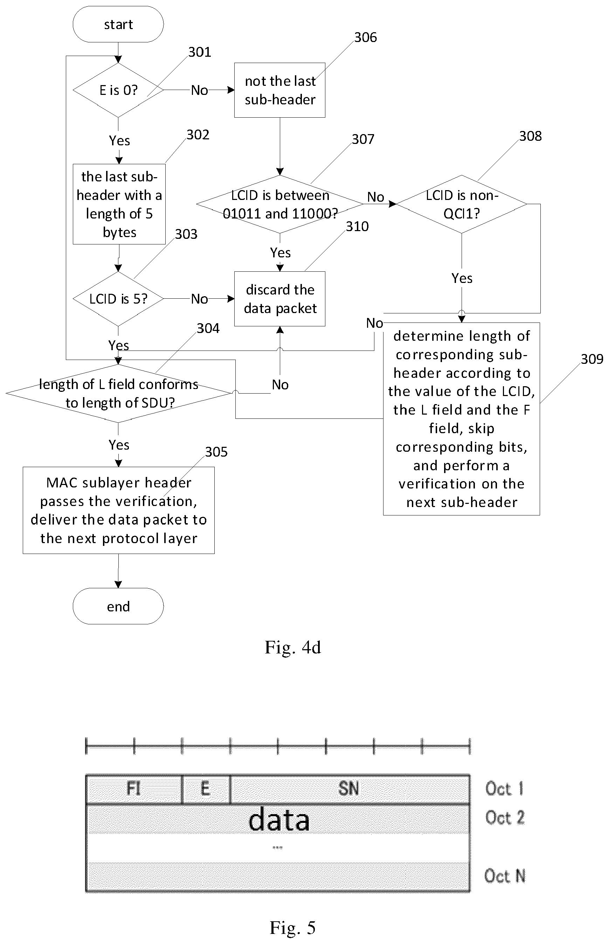

Fig. 4d shows a flow chart of performing a bit-by-bit verification on the MAC sublayer header data of the data packet according to a data packet header format preset at the MAC sublayer in the embodiment of the present disclosure. In response to that all bits in the MAC sublayer header data of the data packet conforms to the data packet header format preset at the MAC sublayer, it is determined that the data packet passes the verification at the MAC sublayer, and the data packet is delivered to the next protocol layer. In response to that there is a bit, in the MAC sublayer header data of the data packet, not conforming to the data packet header format preset at the MAC sublayer, the data packet is discarded. As shown in Fig. 4d, the step of performing the bit-by-bit verification on the MAC sublayer header data of the data packet in the embodiment of the present disclosure includes following steps 301 to 309.

At step 301, it is judged whether a value of E field is 0, step 302 is performed in response to that the value of E field is 0, and step 306 is performed in response to that the value of E field is not 0.

At step 302, in response to that the value of E field is 0, it is determined that the sub-header is the last sub-header in the MAC sublayer header, and the sub-header has a length of 5 bytes.

At step 303, it is judged whether the LCID value of the data packet is 5, step 304 is performed in response to that the LCID value is 5, and step 310 is performed in response to that the LCID value is not 5.

At step 304, it is judged whether a length of L field is identical to that of a service data unit (SDU), step 305 is performed in response to that the length of L field is identical to that of the SDU, and step 310 is performed in response to that the length of L field is not identical to that of the SDU.

At step 305, it is determined that the MAC sublayer header passes the verification, and the data packet is delivered to the next protocol layer.

At step 306, it is determined that the sub-header is not the last sub-header.

At step 307, it is judged whether the LCID value of the data packet is between 01011 and 11000, step 310 is performed in response to that the LCID value of the data packet is between 01011 and 11000, and step 308 is performed in response to that the LCID value of the data packet is not between 01011 and 11000.

At step 308, it is judged whether the LCID value is equal to a value of a non-QCIl, step 309 is performed in response to that the LCID value is equal to the value of the non-QCIl, and step 304 is performed in response to that the LCID value is not equal to the value of the non-QCIl.

At step 309, the length of corresponding sub-header is determined according to the value of the LCID, the L field and the F field, corresponding bits are skipped, and a verification is performed on the next sub-header.

At step 310, the corresponding data packet is discarded.

Through bit-by-bit parsing and matching for the header of the data packet, the length of the sub-header is determined according to the meaning of each bit in the header of the data packet predetermined at the protocol layer, then the verification is performed one by one sub-header, and in response to that one mismatch is found, the data packet is discarded. For example, for the data packet 10101000111000 ...... that fails to pass the CRC, the data packet 10101000111000 ...... is compared with the data packet header format predetermined at the protocol layer sequentially from an upper bit to a lower bit, if the first bit of the data packet header format predetermined at the protocol layer is R which is default to 0, the first bit of the data packet 10101000111000 ...... that fails to pass the CRC is 1, and does not match with the first bit of the data packet header format predetermined at the protocol layer, thus the data packet is considered to fail to pass a header verification of the protocol layer, and the data packet can be directly discarded at the protocol layer.

After the data packet passes the header verification of the MAC sublayer, the data packet is delivered to the RLC sublayer, so that an RLC sublayer identification bit of the data packet is verified according to an identification bit format of the RLC layer at the RLC sublayer.

In some implementations, the RLC sublayer identification bit of the data packet is an RLC sublayer sequence number (SN) value of unacknowledged mode.

In the embodiment of the present disclosure, the RLC sublayer SN value of the data packet may be matched with a window range value preset by the RLC sublayer, in response that the RLC sublayer sequence number (SN) value of the data packet is within the window range value preset by the RLC sublayer, it is determined that the RLC sublayer header of the data packet passes the verification, and the data packet may be delivered to the next protocol layer; in response to that the RLC sublayer sequence number (SN) value of the data packet exceeds the window range value preset by the RLC sublayer, the data packet is discarded.

In practical applications, a length of the RLC sublayer sequence number (SN) may be preset to be 5 bits, the SN ranges from SNO to SN31, a half-window of the SN has a length of 16. A verification performed on the RLC sublayer identification bit of the data packet according to the identification bit format of the RLC sublayer is to verify the RLC sublayer SN value of the data packet, and in response to that the RLC sublayer SN value parsed according to the data packet falls within the half-window preset by the RLC sublayer, the RLC sublayer header of the data packet passes the verification.

Fig. 5 shows a format of an SN header having a length of 5 bits for an RLC sublayer SN in the UM mode, and in practical applications, for parsing the RLC sublayer header of the data packet, only the SN value needs to be determined. For the data packet that fails to pass the CRC and is delivered to the RLC sublayer, because the length of the RLC sublayer SN is 5 bits, and the length of the RLC sublayer header is 1 byte, it is only necessary to verify a data format of the most significant 1 byte of the data packet, if the CRC fails, and the most significant 1 byte of the delivered data packet is 00101110, according to Fig. 5, it can be parsed that the RLC sublayer SN value of the data packet is 01110, that is, 14, which indicates that the SN value of the currently parsed data packet which fails to pass the CRC is 14. If the RLC sublayer SN value of the data packet received before the current data packet is 1, it is determined that the current data packet is in a continuous error, and thus the current data packet is discarded. If the RLC sublayer SN value of the data packet received before the current data packet is 13, it is determined that the RLC sublayer header of the current data packet passes the verification, and the current data packet is delivered to the next protocol layer.

In a normal case, for the data packet that passes the CRC, the data packet is not discarded regardless of the parsed RLC sublayer SN value.

After the data packet passes the header verification of RLC sublayer, the data packet is delivered to the PDCP sublayer, and a PDCP identification bit of the data packet is verified according to an identification bit format of the PDCP sublayer.

In some implementations, the PDCP identification bit of the data packet is a PDCP sublayer sequence number (SN) value.

In the embodiment of the present disclosure, the PDCP sublayer sequence number (SN) value of the data packet may be compared with a SN value preset by the PDCP sublayer to generate a comparison result, in response to that the comparison result is less than or equal to a preset threshold, the data packet is delivered to a layer next to the PDCP sublayer in the communication protocol stack, and in response to that the comparison result is greater than the preset threshold, the data packet is discarded.

In practical applications, a length of the PDCP sublayer SN may be preset to be 7 bits. If the PDCP sublayer SN value of the parsed data packet is far away from the PDCP sublayer SN value of the data packet received recently by the PDCP sublayer, it is considered that the PDCP sublayer header of the data packet fails to pass the verification, and the data packet is discarded. If the PDCP sublayer SN value of the analyzed data packet is closer to the PDCP sublayer SN value of the data packet received recently by the PDCP sublayer, it is considered that the PDCP sublayer header of the data packet passes the verification, and the data packet is continuously delivered to the next protocol layer. For example, if PDCP sublayer SN values of data packets that the PDCP sublayer has received are 1, 2, 3, 4 and 5, the SN values (1, 2, 3, 4 and 5) of the data packets that have been received by the PDCP sublayer may be set as preset thresholds, and if the PDCP sublayer SN value parsed from the currently received data packet is 40, which is not close to the PDCP sublayer SN values (1, 2, 3, 4 and 5) of the data packets that the PDCP sublayer has received, it is determined that the PDCP sublayer header of the currently received data packet has an error, and the currently received data packet is discarded, and if the PDCP sublayer SN value parsed from the currently received data packet is 6 or 7, which is close to the PDCP sublayer SN values (1, 2, 3, 4 and 5) of the data packets that the PDCP sublayer has received, it is determined that the PDCP sublayer header of the currently received data packet passes the verification, and the currently received data packet is continuously delivered to the next protocol layer.

The method for performing the verification on the IP sublayer header, the TCP sublayer header/UDP sublayer header, and the RTP sublayer header of the data packet may be a conventional verification method in the art, and is not described herein again.

An embodiment of the present disclosure further provides a terminal, which includes a processor and a memory, where the memory stores a program including executable instructions, and the processor executes the program to implement the data packet repair method according to the embodiments of the present disclosure.

An embodiment of the present disclosure further provides a computer-readable storage medium storing a computer program thereon, and the computer program, when executed, implements the data packet repair method according to the embodiments of the present disclosure.

With the data packet repair method, the base station, the terminal and the computer-readable storage medium provided by the embodiments of the present disclosure, the data packet that fails to pass the CRC at the physical layer is further delivered to the next protocol layer and verified, in response to that corresponding header data of the data packet matches the header format preset by the next protocol layer, the data packet is continuously delivered to the next protocol layer until the data packet is delivered to the application layer, and in response to that the corresponding header data of the data packet fails to match the header format preset by the protocol layer, the data packet is discarded, in such way, with minimal modification and minimal negative impact on the communication network structure, the packet loss rate is reduced, and in a case that the retransmission mechanism is used, the retransmission times are reduced, thereby reducing the delay and the jitter, and reducing resource overhead caused by retransmission, and finally, the user's experiences are improved.

The described embodiments and implementations are only examples and are not intended to limit the scope of the present disclosure, and those skilled in the art can make various modifications and variations to the embodiments and implementations of the present disclosure without departing from the spirit and scope of the present disclosure.

## Claims

1. A data packet repair method, comprising:
delivering a data packet to a second protocol layer of a communication protocol stack in response to that the data packet fails to pass a verification at a first protocol layer of the communication protocol stack;
performing a verification on an identification bit of the data packet for the second protocol layer at the second protocol layer of the communication protocol stack; and
discarding the data packet in response to that the identification bit of the data packet for the second protocol layer fails to pass the verification.

2. The method of claim 1, further comprising:
delivering the data packet to an application layer in response to that the identification bit of the data packet for the second protocol layer passes the verification.

3. The method of claim 1 or 2, wherein the first protocol layer of the communication protocol stack is a physical layer, and the second protocol layer of the communication protocol stack comprises a medium access control sublayer, a radio link control sublayer and a packet data convergence protocol sublayer.

4. The method of claim 3, wherein performing the verification on the identification bit of the data packet for the second protocol layer at the second protocol layer of the communication protocol stack comprises:
performing a bit-by-bit verification on header data of the data packet according to a data packet header format preset at the medium access control sublayer;
in response to that all bits in the header data of the data packet conforms to the data packet header format preset at the medium access control sublayer, determining that the data packet passes the verification and delivering the data packet to the radio link control sublayer; and
in response to that there is a bit, in the header data of the data packet, not conforming to the data packet header format preset at the medium access control sublayer, discarding the data packet.

5. The method of claim 4, wherein at the radio link control sublayer, a radio link control sequence number value of the data packet is matched with a window range value preset by the radio link control sublayer, in response to that the radio link control sequence number value of the data packet is within the window range value preset by the radio link control sublayer, it is determined that the data packet passes the verification and the data packet is delivered to the packet data convergence protocol sublayer, and in response to that the radio link control sequence number value of the data packet exceeds the window range value preset by the radio link control sublayer, the data packet is discarded.

6. The method of claim 5, wherein at the packet data convergence protocol sublayer, a packet data convergence protocol sequence number value of the data packet is compared with a sequence number value preset by the packet data convergence protocol sublayer to generate a comparison result, in response to that the comparison result is less than or equal to a preset threshold, the data packet is delivered to an application layer, and in response to that the comparison result is greater than the preset threshold, the data packet is discarded.

7. The method of claim 1, further comprising:
delivering the data packet to a third protocol layer of the communication protocol stack in response to that the identification bit of the data packet for the second protocol layer passes the verification;
performing a verification on an identification bit of the data packet for the third protocol layer at the third protocol layer of the communication protocol stack; and
discarding the data packet in response to that the identification bit of the data packet for the third protocol layer fails to pass the verification, and delivering the data packet to an application layer in response to that the identification bit of the data packet for the third protocol layer passes the verification.

8. The method of claim 7, wherein the third protocol layer of the communication protocol stack comprises an internet protocol sublayer, a transmission control protocol sublayer or a user data protocol sublayer, and a real-time transport protocol sublayer.

9. A base station, comprising:
a delivery module configured to deliver a data packet to a second protocol layer of a communication protocol stack in response to that the data packet fails to pass a verification at a first protocol layer of the communication protocol stack; and
a verification module configured to perform a verification on an identification bit of the data packet for the second protocol layer at the second protocol layer of the communication protocol stack, and discard the data packet in response to that the identification bit of the data packet for the second protocol layer fails to pass the verification.

10. The base station of claim 1, wherein the delivery module is further configured to:
deliver the data packet to an application layer in response to that the identification bit of the data packet for the second protocol layer passes the verification.

11. The base station of claim 9 or 10, wherein the first protocol layer of the communication protocol stack is a physical layer, and the second protocol layer of the communication protocol stack comprises a medium access control sublayer, a radio link control sublayer and a packet data convergence protocol sublayer.

12. The base station of claim 11, wherein the verification module is configured to:
perform a bit-by-bit verification on header data of the data packet according to a data packet header format preset at the medium access control sublayer,
determine that the data packet passes the verification at the medium access control sublayer in response to that all bits in the header data of the data packet conforms to the data packet header format preset at the medium access control sublayer, and
discard the data packet in response to that there is a bit, in the header data of the data packet, not conforming to the data packet header format preset at the medium access control sublayer; and
the delivery module is configured to:
deliver the data packet to the radio link control sublayer in response to that the data packet passes the verification at the medium access control sublayer.

13. The base station of claim 12, wherein the verification module is further configured to:
match, at the radio link control sublayer, a radio link control sequence number value of the data packet with a window range value preset by the radio link control sublayer,
in response to that the radio link control sequence number value of the data packet is within the window range value preset by the radio link control sublayer, determine that the data packet passes the verification at the radio link control sublayer, and
in response to that the radio link control sequence number value of the data packet exceeds the window range value preset by the radio link control sublayer, discard the data packet; and
the delivery module is further configured to:
deliver the data packet to the packet data convergence protocol sublayer in response to that the data packet passes the verification at the radio link control sublayer.

14. The base station of claim 13, wherein the verification module is further configured to:
compare, at the packet data convergence protocol sublayer, a packet data convergence protocol sequence number value of the data packet with a sequence number value preset by the packet data convergence protocol sublayer to generate a comparison result, and
discard the data packet in response to that the comparison result is greater than a preset threshold; and
the delivery module is configured to:
deliver the data packet to an application layer in response to that the comparison result is less than or equal to the preset threshold value.

15. The base station of claim 9, wherein the delivery module is further configured to:
deliver the data packet to a third protocol layer of the communication protocol stack in response to that the identification bit of the data packet for the second protocol layer passes the verification;
the verification module is further configured to:
perform a verification on an identification bit of the data packet for the third protocol layer at the third protocol layer of the communication protocol stack, and
discard the data packet in response to that the identification bit of the data packet for the third protocol layer fails to pass the verification; and
the delivery module is further configured to:
deliver the data packet to an application layer in response to that the identification bit of the data packet for the third protocol layer passes the verification.

16. The base station of claim 15, wherein the third protocol layer of the communication protocol stack comprises an internet protocol sublayer, a transmission control protocol sublayer or a user data protocol sublayer, and a real-time transport protocol sublayer.

17. A terminal comprising a processor and a memory, the memory having stored thereon a program comprising executable instructions which, when executed by the processor, cause the processor to implement the method of any of claims 1 to 8.

18. A computer-readable storage medium, having stored thereon a computer program which, when executed by a processor, cause the processor to implement the method of any of claims 1 to 8.
